# EUROPEAN PATENT APPLICATION

(11) **EP 2 390 870 A1**
(43) Date of publication of application: **30.11.2011**
(21) Application number: 10009269.1
(22) Date of filing: 07.09.2010
(51) Int. Cl.: G09G 3/34, H02M 3/158, H02M 1/36

(54) **Apparatus and method for driving e-paper panel**

(30) Priority: 31.05.2010 KR 20100050974
(71) Applicant: Samsung Electro-Mechanics Co., Ltd., Suwon-si, Gyeonggi-do (KR)
(72) Inventor: Park, Chan Woo, Ansan-si Gyeonggi-do 425-022 (KR); Lee, Kyung Ho, Ansan-si Gyeonggi-do 426-170 (KR); Kwon, Kyoung Soo, Yongin-si Gyeonggi-do 446-567 (KR); Lee, Youn Joong, Seoul 138-942 (KR); Kwon, Oh Jo, Suwon-si Gyeonggi-do 443-372 (KR); Park, Deuk Hee, Seoul 139-811 (KR)
(74) Representative: Böck, Bernhard

(57) **Abstract**

Disclosed herein are an apparatus and a method for driving an e-paper panel. The e-paper panel driving apparatus includes a DC/DC converter that converts and outputs DC voltage to be input into a preset voltage and supplies the output voltage as a driving voltage of an e-paper panel; a sensing module that senses load conditions of the e-paper panel; and a control module that varies the driving frequency of the DC/DC converter according to the load conditions of the e-paper panel sensed by the sensing module. According to the present invention, the driving clock of the DC/DC converter that supplies the driving voltage to the e-paper panel is varied in consideration of the load conditions of the e-paper panel, thereby making it possible to prevent an image quality of the e-paper panel from being degraded due to unstable power supply, while simultaneously minimizing unnecessary power consumption of the e-paper panel driving apparatus.

## Description

### CROSS REFERENCE TO RELATED APPLICATION

This application claims the benefit of Korean Patent Application No. 10-2010-0050974, filed on May 31, 2010, entitled "Apparatus And Method For Driving E-Paper Panel", which is hereby incorporated by reference in its entirety into this application.

### BACKGROUND OF THE INVENTION

### 1. Technical Field

The present invention relates to an e-paper display, and more particularly, to a driving power supply technology of an e-paper panel.

### 2. Description of the Related Art

Recently, electronic paper has been introduced into various kinds of fields in order to replace paper using an existing cellulose pulp. The electronic paper is advantageous in that it has a similar feeling such as being printed on general paper with ink, it is foldable or bendable different from a flat display, and it does not consume additional power after displaying an image at one time.

Despite such advantages, an e-paper display is mainly used in a mobile apparatus driven by a battery, such that various researches have been conducted in order to effectively reduce power consumption by optimizing a driving circuit of an e-paper panel.

### SUMMARY OF THE INVENTION

An object of the present invention is to prevent an image quality of an e-paper panel from being degraded due to unstable power supply, while simultaneously minimizing unnecessary power consumption of an e-paper panel driving apparatus.

According to an exemplary embodiment of the present invention, there is provided an e-paper panel driving apparatus, including: a DC/DC converter that converts and outputs DC voltage to be input into a preset voltage and supplies the output voltage as a driving voltage of an e-paper panel; a sensing module that senses load conditions of the e-paper panel; and a control module that varies the driving frequency of the DC/DC converter according to the load conditions of the e-paper panel sensed by the sensing module.

At this time, when the load conditions sensed by the sensing module are increased, the control module may increase the driving frequency of the DC/DC converter, and when the load conditions sensed by the sensing module are decreased, the control module may decrease the driving frequency of the DC/DC converter.

The e-paper panel driving apparatus may further include a memory module that includes a lookup table in which the load conditions of the e-paper panel and the proper driving frequency of the DC/DC converter are accordingly listed.

At this time, the control module may extract the proper driving frequency value according to the load conditions of the e-paper panel sensed by the sensing module from the lookup table and convert the driving frequency of the DC/DC converter according to the proper driving frequency according to the extracted proper driving frequency.

Meanwhile, according to an exemplary embodiment of the present invention, there is provided a method of driving an e-paper panel, including: sensing load conditions of an e-paper panel, in an e-paper panel driving apparatus; and changing the driving frequency of a DC/DC converter according to the load conditions of the sensed e-paper panel, in the e-paper panel driving apparatus.

The changing the driving frequency of the DC/DC converter may increase the driving frequency of the DC/DC converter when the load conditions sensed by the sensing module are increased, and decrease the driving frequency of the DC/DC converter when the load conditions are decreased.

The changing the driving frequency of the DC/DC converter may include: calculating the proper driving frequency of the DC/DC converter according to the sensed load conditions, in the e-paper panel driving apparatus; and changing the driving frequency of the DC/DC converter according to the calculated proper driving frequency, in the e-paper panel driving apparatus.

The calculating the proper driving frequency of the DC/DC converter may extract the proper driving frequency of the DC/DC converter according to the sensed load conditions from a lookup table.

### BRIEF DESCRIPTION OF THE DRAWINGS

FIG. 1 is a block diagram of an e-paper panel driving apparatus 100 according to an embodiment of the present invention;
FIGS. 2 and 3 are graphs explaining an operation of an e-paper panel driving apparatus 100 according to an embodiment of the present invention; and
FIG. 4 is a flow chart showing a method for driving an e-paper panel 400 according to an embodiment of the present invention.

### DESCRIPTION OF THE PREFERRED EMBODIMENTS

Hereinafter, exemplary embodiments of the present invention will be described with reference to the accompanying drawings. However, the exemplary embodiments are described by way of examples only and the present invention is not limited thereto.

In describing the present invention, a detailed description of well-known technology relating to the present invention may unnecessarily make unclear the spirit of the present invention, the detailed description thereof will be omitted. Further, the following terminologies are defined in consideration of the functions in the present invention and may be construed in different ways by the intention of users and operators. Therefore, the definitions thereof should be construed based on the contents throughout the specification.

As a result, the spirit of the present invention is determined by the claims and the following exemplary embodiments may be provided to efficiently describe the spirit of the present invention to those skilled in the art.

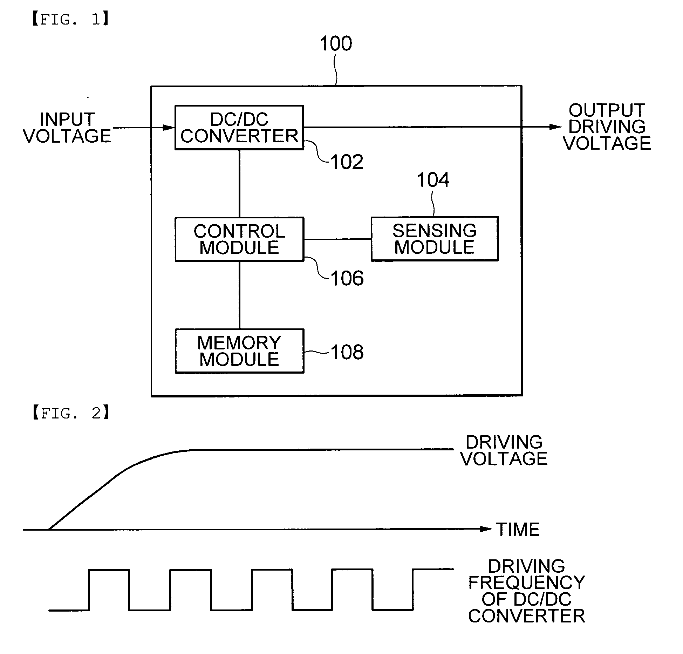

FIG. 1 is a block diagram of an e-paper panel driving apparatus 100 according to an embodiment of the present invention.

The e-paper panel driving apparatus 100 shown in the figure is an apparatus that supplies driving voltage to an e-paper panel (not shown). In general, the e-paper panel requires power of 15V or more in order to drive thereof and thus, the e-paper panel driving apparatus 100 generates driving voltage required for the e-paper panel by boosting the power voltage.

As shown in FIG. 1, the e-paper panel driving apparatus 100 according to an embodiment of the present invention includes a DC/DC converter 102, a sensing module 104, and a control module 106. The e-paper panel driving apparatus 100 may also include a memory module 108, as needed.

The DC/DC converter 102 converts and outputs the voltage of the DC voltage to be input as a preset voltage and supplies the voltage to be output as a driving voltage of the e-paper panel. The magnitude of the voltage converted and output from the DC/DC converter 102 is determined according to the types of e-paper panels connected to the e-paper panel driving apparatus 100.

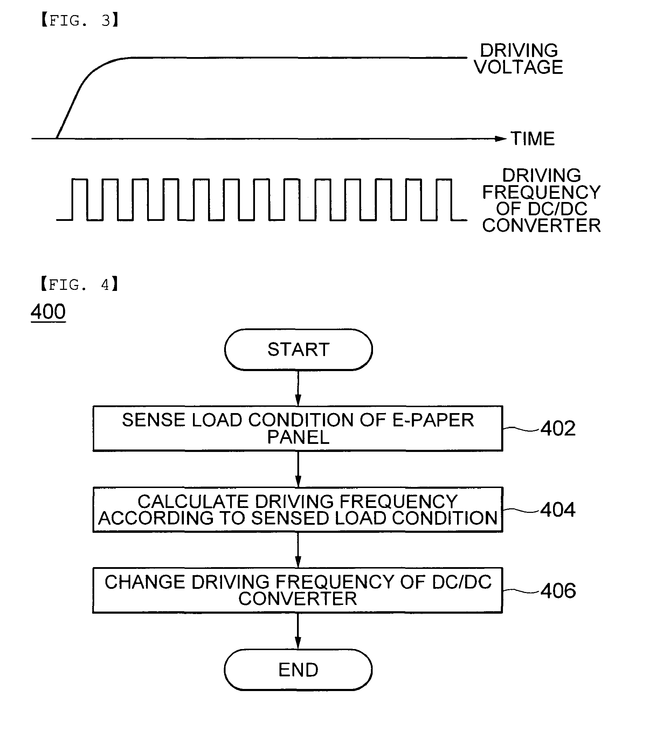

The sensing module 104 senses load conditions of the e-paper panel. The detailed load conditions of the e-paper panel will be described below with reference to FIGS. 2 and 3.

The control module 106 varies a driving frequency of the DC/DC converter 102 according to the load conditions of the e-paper panel sensed by the sensing module 104. For example, when the load conditions of the e-paper panel sensed by the sensing module 104 are increased as compared to the previous sensed values, the control module 106 increases the driving frequency of the DC/DC converter 102, and when the load conditions of the e-paper panel sensed by the sensing module 104 are decreased as compared to the previous sensed values, the control module 106 decreases the driving frequency of the DC/DC converter 102. As a result, the control module 106 can control the driving frequency of the DC/DC converter 102 so that a boosting time of the DC/DC converter 102 is maintained constantly regardless of the load conditions.

The e-paper panel driving apparatus 100 according to an embodiment of the present invention as described above may further include the memory module 108. The memory module 108 may be stored with a lookup table in which various load conditions of the e-paper panel and proper driving frequency of the DC/DC converter 102 according to each of the load conditions are listed. The memory module 108 in which the lookup table is stored is further included as described above, the control module 106 can extract the proper driving frequency value according to the load conditions of the e-paper panel sensed by the sensing module 104 from the lookup table and vary the driving frequency of the DC/DC converter 102 according to the extracted proper driving frequency.

FIGS. 2 and 3 are graphs explaining an operation of an e-paper panel driving apparatus 100 according to an embodiment of the present invention.

In order to drive an e-paper panel, voltage of 15V or more is generally applied for a predetermined time or more. To this end, the e-paper panel driving apparatus 100 boosts the voltage input from a battery or the like using the DC/DC converter 102 to supply it to the e-paper panel. However, even though voltage is input to the DC/DC converter 102, a desired voltage is not immediately output but a time is required to reach the desired voltage as shown. This time is called as a boosting time.

The boosting time is determined according to the characteristics of the e-paper panel connected to the DC/DC converter 102, that is, the load conditions. For example, when being connected to the e-paper panel having the large load conditions, the boosting time of the DC/DC converter 102 is lengthened, and when being connected to the e-paper panel having the small load conditions, the boosting time of the DC/DC converter 102 is shortened.

When driving the e-paper panel, if the DC/DC converter 102 is driven by the same driving clock, while ignoring the load conditions as described above, the following problems arise. In other words, in the case of the e-paper panel having the large load conditions, the voltage output from the DC/DC converter 102 is supplied to the e-paper panel before the boosting is completed in the DC/DC converter 102, such that an image quality displayed on the e-paper panel is degraded. Further, in the case of the e-paper panel having the small load conditions, the DC/DC converter 102 is to be continuously driven even after the boosting is completed in the DC/DC converter 102, such that unnecessary power consumption is generated.

In order to solve the problems as described above, the present invention is configured to sense the load conditions of the e-paper panel and vary the driving frequency of the DC/DC converter 102 accordingly. In other words, as shown in FIG. 2, when the driving frequency of the DC/DC converter 102 is lowered, the boosting time of the DC/DC converter 102 is lengthened, whereas, as shown in FIG. 3, when the driving frequency of the DC/DC converter 102 is heightened, the boosting time of the DC/DC converter 102 is shortened. Therefore, with the present invention, when the e-paper panel has large load conditions and the boosting time of the DC/DC converter 102 is thus lengthened, the driving frequency of the DC/DC converter 102 is increased to shorten the boosting time. However, when the e-paper panel has small load conditions and the boosting time of the DC/DC converter 102 is thus shortened, the driving frequency of the DC/DC converter 102 is decreased to lengthen the boosting time. Therefore, the voltage boosting time of the DC/DC converter 102 can be maintained constantly regardless of the characteristics of the e-paper panel.

In the present embodiment, the load conditions of the e-paper panel may be different according to capacitance between the e-paper panel and a ground and output resistance of a driving circuit. This may occur due to a difference in manufacturing processes of each of the e-paper panels, parasitic resistance of lines connecting the panel to the driving circuit, temperature change in the environment in which the e-paper panel is located, or the like.

The change in load conditions of the e-paper panel may be appreciated by measuring current or voltage of the panel. For example, the change in load conditions of the e-paper panel may be judged based on whether the voltage reaches a reference voltage within a certain time by the fedback driving voltage of the e-paper panel.

FIG. 4 is a flow chart showing a method for driving an e-paper panel 400 according to an embodiment of the present invention.

First, the load conditions of the e-paper panel are sensed in the e-paper panel driving apparatus 100 (402).

Thereafter, the proper driving frequency of the DC/DC converter according to the sensed load condition is calculated (404). As described above, the calculation of the proper driving frequency may be made by judging whether the load conditions are increased or decreased and how much they are increased or decreased with reference to the preset lookup table or through the comparison with the previous sensed value.

Then, the driving frequency of the DC/DC converter is changed according to the calculated proper driving frequency, thereby controlling the boosting time of the DC/DC converter to be maintained constantly (406).

According to the present invention, the driving clock of the DC/DC converter that supplies the driving voltage to the e-paper panel is varied in consideration of the load conditions of the e-paper panel, thereby making it possible to prevent an image quality of the e-paper panel from being degraded due to unstable power supply, while simultaneously minimizing unnecessary power consumption of the e-paper panel driving apparatus.

Although the exemplary embodiments of the present invention have been disclosed for illustrative purposes, those skilled in the art will appreciate that various modifications, additions and substitutions are possible, without departing from the scope and spirit of the invention as disclosed in the accompanying claims.

Accordingly, the scope of the present invention is not construed as being limited to the described embodiments but is defined by the appended claims as well as equivalents thereto.

## Claims

1. An e-paper panel driving apparatus, comprising:
a DC/DC converter that converts and outputs DC voltage to be input into a preset voltage and supplies the output voltage as a driving voltage of an e-paper panel;
a sensing module that senses load conditions of the e-paper panel; and
a control module that varies the driving frequency of the DC/DC converter according to the load conditions of the e-paper panel sensed by the sensing module.

2. The e-paper panel driving apparatus according to claim 1, wherein when the load conditions sensed by the sensing module are increased, the control module increases the driving frequency of the DC/DC converter, and when the load conditions sensed by the sensing module are decreased, the control module decreases the driving frequency of the DC/DC converter.

3. The e-paper panel driving apparatus according to claim 1, further comprising a memory module that includes a lookup table in which the load conditions of the e-paper panel and the proper driving frequency of the DC/DC converter are accordingly listed.

4. The e-paper panel driving apparatus according to claim 3, wherein the control module extracts the proper driving frequency value according to the load conditions of the e-paper panel sensed by the sensing module from the lookup table and converts the driving frequency of the DC/DC converter according to the proper driving frequency according to the extracted proper driving frequency.

5. A method of driving an e-paper panel, comprising:
sensing load conditions of an e-paper panel, in an e-paper panel driving apparatus; and
changing the driving frequency of a DC/DC converter according to the load conditions of the sensed e-paper panel, in the e-paper panel driving apparatus.

6. The method of driving an e-paper panel according to claim 5, wherein the changing the driving frequency of the DC/DC converter increases the driving frequency of the DC/DC converter when the load conditions sensed by the sensing module are increased, and decreases the driving frequency of the DC/DC converter when the load conditions are decreased.

7. The method of driving an e-paper panel according to claim 5, wherein the changing the driving frequency of the DC/DC converter includes:
calculating the proper driving frequency of the DC/DC converter according to the sensed load conditions, in the e-paper panel driving apparatus; and
changing the driving frequency of the DC/DC converter according to the calculated proper driving frequency, in the e-paper panel driving apparatus.

8. The method of driving an e-paper panel according to claim 7, wherein the calculating the proper driving frequency of the DC/DC converter extracts the proper driving frequency of the DC/DC converter according to the sensed load conditions from a lookup table.
